Europäisches Patentamt

European Patent Office

Office européen des brevets

(19)

(11) Veröffentlichungsnummer: **0 297 403**

**A2**

(12) # EUROPÄISCHE PATENTANMELDUNG

(21) Anmeldenummer: **88109873.5**

(22) Anmeldetag: **21.06.88**

(51) Int. Cl.⁴: **H04B 1/66 , H04B 14/04**

(30) Priorität: **30.06.87 DE 3721478**

(43) Veröffentlichungstag der Anmeldung:
**04.01.89 Patentblatt 89/01**

(84) Benannte Vertragsstaaten:
**AT BE CH DE ES FR GB GR IT LI LU NL SE**

(71) Anmelder: **Deutsche Thomson-Brandt GmbH
Postfach 2060
D-7730 Villingen-Schwenningen(DE)**

(72) Erfinder: **Schröder, Ernst, Dipl.-Ing.
Pinkenburger Strasse 25D
D-3000 Hannover 51(DE)**
Erfinder: **Bachnick, Werner, Dipl.-Ing.
Am Soltekampe 161
D-3000 Hannover 91(DE)**

(74) Vertreter: **Körner, Peter, Dipl.-Ing.
Deutsche Thomson-Brandt GmbH Patent-
und Lizenzabteilung Göttinger Chaussee 76
D-3000 Hannover 91(DE)**

(54) **Verfahren zur Übertragung und/oder Aufzeichnung und Wiedergabe von digitalisierten Audiosignalen.**

(57) 1.1 Verfahren zur Übertragung und/oder Aufzeichnung und Wiedergabe von digitalisierten Audiosignalen.

2.1 Es sind Verfahren bekannt, bei denen Signalwerte digitalisierter Audiosignale vor der Übertragung oder Aufzeichnung blockweise Datenpaketen zugewiesen werden und nach der Übertragung wieder in die ursprünglichen Signalwerte zurückgewandelt werden. Durch die Anzahl der zur Verfügung stehenden Datenpakete pro Zeiteinheit ist die Anzahl übertragbarer Audiokanäle begrenzt.

2.2 Eine bessere Ausnutzung der Datenpakete kann erreicht werden, wenn vor der Zuweisung zu den Datenpaketen eine datenreduzierende Codierung und nach der Übertragung eine Decodierung durchgeführt wird.

2.3 Das Verfahren ist z.B. bei D2-MAC anwendbar, wo es die Zahl übertragbarer Audiokanäle auf 10 Kanäle erhöht.

EP 0 297 403 A2

## Verfahren zur Übertragung und/oder Aufzeichnung und Wiedergabe von digitalisierten Audiosignalen

Die Erfindung betrifft ein Verfahren zur Übertragung und/oder Aufzeichnung und Wiedergabe von digitalisierten Audiosignalen nach dem Oberbegriff des Anspruchs 1.

Es ist z.B. durch das D2-MAC Verfahren (Duo-Binär-Multiplexed-Analogue-Components) bekannt, in einem komplexen Signal Daten blockweise Datenpakete vorgegebener Gesamtzahl und Größe zuzuweisen und diese Datenpakete dann im Zeitmultiplexverfahren zu übertragen. Die Art der Daten, die den Datenpaketen zugewiesen werden, können im wesentlichen frei bestimmt werden, so daß es sich anbietet, einen großen Teil der Datenpakete für Audiosignale zu reservieren. Dabei hängt es von der Codierung der Audiosignale ab, wie viele Audiokanäle in den zur Verfügung stehenden Paketen untergebracht werden können. Beim gegenwertigen Stand der Normung sind u.a. folgende Möglichkeiten gegeben:

a) bei einer Abtastrate von 32 kHz und 14 Bit Auflösung -2 hochwertige Audiokanäle und ein Kommentarkanal

b) bei einer Abtastrate von 32 kHz und 10/14 Bit Auflösung im NICAM-Code als kompandierte Betriebsart - 4 hochwertige Audiokanäle

c) bei einer Abtastrate von 16 kHz und 10/14 Bit Auflösung im NICAM-Code als kompandierte Betriebsart - 8 Kommentarkanäle Neben diesen Beispielen sind selbstverständlich auch Kombinationen möglich.

Wegen der hohen Kosten, die mit der Übertragung oder Ausstrahlung von derartig codierten Signalen verbunden sind, ist die Einschränkung auf die verhältnismäßig geringe Zahl von Audiokanälen unbefriedigend.

Der Erfindung liegt deshalb die Aufgabe zugrunde, ein Verfahren der eingangs genannten Art so zu verbessern, daß wesentlich mehr Audiokanäle übertragen werden können. Diese Aufgabe wird bei einem Verfahren nach dem Oberbegriff des Anspruchs 1 durch die im kennzeichnenden Teil angegebenen Merkmale gelöst.

Im Zuge einer Datenreduktion werden solche Daten, die für den Informationsgehalt irrelevant sind, fortgelassen. Da diese Daten oft einen großen Anteil des Gesamtsignalumfangs ausmachen, führt das Fortlassen zu einer spürbaren Verringerung des Datenumfangs je Kanal. Dementsprechend können die zur Verfügung stehenden Datenpakete nunmehr mehrere Audiokanäle aufnehmen.

Eine Weiterbildung sieht vor, die Datenreduktion durch Wichtung der Signalwerte in Abhängigkeit psychoakustischer Gesichtspunkte vorzunehmen. Diese Maßnahme unterscheidet zwischen Signalbestandteilen, die vom menschlichen Gehör als Informationsträger empfunden werden, und solchen, auf die dies nicht zutrifft.

In praktischer Ausgestaltung des Verfahrens ist der Grad der Datenreduktion so bemessen, daß die zur blockweisen Zuweisung der Signalwerte vorgesehenen Datenpakete insgesamt oder einzeln zu wenigstens 50% ihrer vorgegebenen Datenkapazität belegt werden. Diese Maßnahme trägt dem mit zunehmender Datenreduktion erheblich zunehmenden Codier- und Decodieraufwand Rechnung und führt zu einer die Wirtschaftlichkeit und Qualität des Gesamtsystems optimierenden Lösung.

Wird nur ein Teil der Datenkapazität für Daten von Signalwerten belegt, so können die restlichen Bereiche für Daten zur Fehlererkennung und gegebenenfalls zur Korrektur von Fehlern während der Übertragung und/oder Aufzeichnung und Wiedergabe verwendet werden.

An Hand eines Ausführungsbeispiels wird beschrieben, wie die Anzahl der Audiokanäle beim D2-MAC Verfahren durch geeignete Modifikation eines unter der Bezeichnung MSC bekannt gewordenen Datenreduktionsverfahrens, wie es z.B. in der DE-OS 3506 912 beschrieben ist, erhöht werden kann. Die technischen Daten sind für drei unterschiedliche Abtastraten zur besseren Veranschaulichung in einer Tabelle zusammengestellt.

Die in der ersten Spalte enthaltenen Angaben gelten für eine Abtastrate von 32 kHz, die in der zweiten Spalte für 44,1 kHz und die in der dritten Spalte für 48 kHz. Als Blocklänge bei Anwendung des MSC-Verfahrens ergeben sich dann in den zugehörigen Spalten der Tabelle 512, 1024 und ebenfalls 1024 Abtastwerte. Wegen der Überlappung der Blöcke, für deren Gründe auf die genannte Offenlegungsschrift verwiesen wird, ist die Anzahl der effektiven Abtastwerte geringer. Sie beträgt 480, 960 und ebenfalls 960. Bei Anwendung des MSC-Verfahrens aus der erwähnten DE-OS 35 06 512 ist mit einer Bitrate von 4 Bit pro Abtastwert bei 32 kHz Abtastrate und etwa 3 Bit pro Abtastwert bei 44,1 und 48 kHz Abtastrate eine Hi-Fi Übertragungsqualität erreichbar.

Durch Multiplikation dieser Bitraten mit der effektiven Anzahl der Abtastwerte pro Block ergeben sich die Anzahl der Bits pro Block bei 32 kHz Abtastrate mit 1920 Bit, bei 44,1 und 48 kHz Abtastrate mit jeweils 2880 Bit. Die zuletzt genannten Blöcke mit der entsprechenden Anzahl von Bits werden den Datenpaketen zugewiesen, welche beim D2-MAC Verfahren 720 Nutzbit pro Paket umfassen. Daraus ergibt sich, daß bei 32 kHz Abtastrate ein Block auf etwa 3 Pakete und bei 44,1 und 48 kHz Abtastrate ein Block auf 4 Pakete verteilt werden muß.

Die Umrechnung der obigen Angaben auf die Blockrate beim MSC-Verfahren ergibt 66,67 Blöcke pro Sekunde bei 32 kHz Abtastrate, 46 Blöcke pro Sekunde bei 44,1 kHz und 50 Blöcke pro Sekunde bei 48 kHz. Für einen Kanal werden somit benötigt: 200 Pakete pro Sekunde bei 32 kHz, 184 Pakete pro Sekunde bei 44,1 kHz und 200 Pakete pro Sekunde bei 48 kHz. In den zur Verfügung stehenden 2050 Datenpaketen pro Sekunde können damit bis bei allen drei Abtastraten 10 hochwertige Audiokanäle untergebracht und übertragen werden.

Die Ausnutzung der zur Verfügung stehenden Datenpakete ist bei 32 kHz und 48 kHz Abtastrate mit 2000 Datenpaketen pro Sekunde besonders groß. Die übrigen 50, nicht zur Audiosignalübertragung benötigten Pakete können mit Daten für die Fehlererkennung und/oder Korrektur belegt werden. Auch ist es möglich, jedes der Pakete kombiniert mit Daten der Audiosignale und Daten zur Fehlererkennung und Korrektur zu belegen und so sämtliche zur Verfügung stehenden Pakete gemeinsam zu verwenden. Bei 44,1 kHz Abtastrate ist die Ausnutzung etwas ungünstiger. In einem solchen Falle können zusätzliche Daten zur Fehlererkennung und Korrektur übertragen werden, wodurch eine sichere Übertragung auch bei empfindlichen Übertragungsstecken erzielt werden kann.

Die durch die erfindungsgemäße Maßnahme geschaffene erhöhte Zahl von übertragbaren Audiokanälen stellt im Vergleich mit der eingangs erwähnten kompandierten Betriebsart mehr als eine Verdoppelung der Kanalkapazität dar. Dies ist ein wesentlicher Schritt zu besseren Ausnutzung der Übertragungs netze, in denen eine derartige Audiosignalübertragung durchgeführt wird.

| | 32 kHz | 44,1 kHz | 48 kHz |
|---|---|---|---|
| Abtastrate | 32 kHz | 44,1 kHz | 48 kHz |
| Blocklänge (Abtastwerte) | 512 | 1024 | 1024 |
| effektive Blocklänge durch Überlappung (Abtastwerte) | 480 | 960 | 960 |
| Bitrate bei MSC (Bit/Abtastwerte) | 4 | 3 | 3 |
| Bit/Block | 1920 | 2880 | 2880 |
| erforderliche Anzahl von Paketen bei 720 Bit/Paket | 3 | 4 | 4 |
| Blockrate bei MSC (Blöcke/sec) | 66,67 | 46 | 50 |
| Paketrate für 1 Monokanal (Pakete/sec) | 200 | 184 | 200 |
| Anzahl übertragbarer Kanäle | 10 | 10 | 10 |

## Ansprüche

1. Verfahren zur Übertragung und/oder Aufzeichnung und Wiedergabe von digitalisierten Audiosignalen, deren Signalwerte vor der Übertragung oder Aufzeichnung blockweise Datenpaketen zugewiesen und nach der Übertragung oder zur Wiedergabe wieder in die ursprünglichen Signalwerte zurückgewandelt werden, insbesondere bei D2-MAC, dadurch gekennzeichnet, daß vor der Zuweisung zu Datenpaketen eine datenreduzierende Codierung und nach der Übertragung oder zur Wiedergabe eine Decodierung durchgeführt wird.

2. Verfahren nach Anspruch 1, dadurch gekennzeichnet, daß die Datenreduktion durch Wichtung der Signalwerte in Abhängigkeit von psychoakustischen Gesichtspunkten vorgenommen wird.

3. Verfahren nach Anspruch 2, dadurch gekennzeichnet, daß die Signalwerte vor der Wichtung in ein das Kurzeitspektrum darstellende Signal umgewandelt und nach der Übertragung oder zur Wiedergabe in ein im Zeitbereich liegendes Signal zurückgewandelt werden.

4. Verfahren nach einem oder mehreren der Ansprüche I bis 3, dadurch gekennzeichnet, daß der Grad der Datenreduktion so bemessen ist, daß die zur blockweisen Zuweisung der Signalwerte vorgesehenen Datenpakete einzeln oder gesamt zu wenigstens 50% ihrer vorgegebenen Datenkapazität belegt sind.

5. Verfahren nach einem oder mehreren der Ansprüche 1 bis 4, dadurch gekennzeichnet, daß den Datenpaketen zusätzlich zu den Daten der Signalwerte Daten zur Fehlererkennung und/oder -korrektur zugewiesen werden.

6. Verfahren nach Anspruch 4 oder 5, dadurch gekennzeichnet, daß wenigstens ein Teil der nicht von Daten der Signalwerte belegten Datenpakete oder Bereiche der Datenpakete mit Daten zur Fehlererkennung und/oder -korrektur belegt werden.